# EUROPEAN PATENT SPECIFICATION

(11) **EP 3 127 780 B1**
(45) Date of publication and mention of the grant of the patent: **12.12.2018**
(21) Application number: 16168401.4
(22) Date of filing: 04.05.2016
(51) Int. Cl.: B62D 5/04, B62D 7/14, B62D 7/15, F16F 7/10

(54) **REAR WHEEL STEERING DEVICE OF VEHICLE**
HINTERRADLENKVORRICHTUNG EINES FAHRZEUGS
DISPOSITIF DE BRAQUAGE DES ROUES ARRIÈRE D'UN VÉHICULE

(30) Priority: 04.08.2015 JP 2015154421
(43) Date of publication of application: 08.02.2017
(73) Proprietor: AISIN SEIKI KABUSHIKI KAISHA, Kariya-shi Aichi-ken 448-8650 (JP)
(72) Inventor: FUJII, Shimpei, Kariya-shi, Aichi-ken, 448-8650 (JP); TAMAWARI, Shinya, Kariya-shi, Aichi-ken, 448-8650 (JP); SUZUKI, Takashi, Kariya-shi, Aichi-ken, 448-8650 (JP)
(74) Representative: Winter, Brandl, Fürniss, Hübner, Röss, Kaiser, Polte - Partnerschaft mbB

(56) References cited:
- EP-A1- 2 808 231
- DE-A1- 3 445 525
- DE-A1- 4 306 087

## Description

### TECHNICAL FIELD

This disclosure generally relates to a rear wheel steering device of a vehicle.

### BACKGROUND DISCUSSION

Various types of devices are known as rear wheel steering devices that serve as a part of a four-wheel steering system (4WS) of a vehicle. Generally, as described in JP2014-231275A (hereinafter referred to as Patent reference 1), a rear wheel steering device includes a housing, an electric motor, a reduction mechanism, and a linear motion mechanism. The housing is connected to a suspension mechanism via a first connection member and a second connection member. The electric motor is contained in the housing. The reduction mechanism is contained in the housing and reduces an output of the electric motor. The linear motion mechanism includes a nut member that is connected to the reduction mechanism and that is rotated, and a rod that threadedly engages with the nut member and that is connected to the second connection member. The linear motion mechanism converts a rotational motion of the nut member into a linear motion of the rod.

A device disclosed in JP5466185 (hereinafter referred to as Patent reference 2) includes a basic configuration that is different from a basic configuration of the rear wheel steering device disclosed in Patent reference 1. Opposing ends of an output rod are supported by two different kinds of bushes, respectively. Specifically, according to Patent reference 2, the device includes a housing, a rod, and a conversion mechanism. The housing is mounted on a vehicle body. The rod is unrotatably and movable supported relative to the housing in an axial direction. Opposing ends of the rod are connected to right-left rear wheels of a vehicle, respectively. The conversion mechanism is provided between the rod and the housing and converts a rotational drive force of a rotational drive portion into a drive force of the rod in the axial direction. The cylindrical first and second bushes are provided at right-left opposing end portions of the housing, respectively. The first and second bushes slidably engage with an outer circumference of the rod. The first bush has a rod-supporting stiffness that is set lower than a rod-supporting stiffness of the second bush. The first bush has an elastic body that is elastically deformable in a radial direction of the rod. The second bush has a protrusion at an inner circumference so as to support the rod in a tilted manner.

According to the rear wheel steering device disclosed in Patent reference 1, the rod is threadedly engaged with the nut member. The rod includes a first end portion that is connected to the second connection member and a second end portion extending from the nut member and serving as a free end portion. That is, because the free end portion of the rod extends from a bearing outwardly in an axial direction and because a clearance is provided between the rod and the bearing, the rod may be easily displaced in a radial direction, and may oscillates in the radial direction by an outer force or a driving force of the rear wheel steering device. Meanwhile, the device disclosed in Patent reference 2 hardly includes a clearance between the rod and the bushes, and may prevent abnormal noises. However, the basic configuration of the device disclosed in patent reference 2 is different from the basic configuration of the rear wheel steering device disclosed in Patent reference 1. Because the opposing ends of the rod are supported by the two different kinds of bearings, a mountability is degraded if the configuration of the device disclosed in Patent reference 2 is applied to the rear wheel steering device disclosed in Patent reference 1, and a length of the rear wheel steering device disclosed in Patent reference 1 extends.

A need thus exists for a rear wheel steering device of a vehicle being provided at a suspension mechanism supporting rear wheels of the vehicle, the rear wheel steering device that steers the rear wheels of the vehicle, the rear wheel steering device that may appropriately absorb oscillations of a rod in a radial direction.

EP 2 808 231 A1 discloses a rear wheel steering device of a vehicle, comprising a housing configured to be connected to a suspension mechanism via a first connection member and a second connection member, the suspension mechanism supporting rear wheels of the vehicle; an electric motor being contained in the housing; a reduction mechanism being contained in the housing, the reduction mechanism reducing an output speed of the electric motor; and a linear motion mechanism including a nut member and a rod, the nut member being connected to the reduction mechanism and being rotated, the rod being threadedly engaged with the nut member, the rod including a first end portion and a second end portion, the first end portion being connected to the second connection member, the second end portion extending from the nut member and serving as a free end portion.

DE 34 45 525 A1 and DE 43 06 087 A1 disclose annular members having an axial and radial clearance at an end portion of a rod.

### SUMMARY

According to an aspect of this disclosure, a rear wheel steering device of a vehicle includes a housing configured to be connected to a suspension mechanism via a first connection member and a second connection member, the suspension mechanism supporting rear wheels of the vehicle, an electric motor being contained in the housing; a reduction mechanism being contained in the housing, the reduction mechanism reducing an output speed of the electric motor; and a linear motion mechanism including a nut member, a rod, and an annular member, the nut member being connected to the reduction mechanism and being rotated, the rod being threadedly engaged with the nut member, the rod including a first end portion and a second end portion, the first end portion being connected to the second connection member, the second end portion extending from the nut member and serving as a free end portion, the annular member being retained at the free end portion of the rod while having clearances between the free end portion of the rod and the annular member in an axial direction and in a radial direction of the rod, respectively, the linear motion mechanism converting a rotational motion of the nut member into a linear motion of the rod.

According to the aforementioned configuration, the rear wheel steering device of the vehicle, because the linear motion mechanism converting the rotational motion of the nut member into the linear motion of the rod includes the nut member being connected to the reduction mechanism and being rotated, the rod being threadedly engaged with the nut member, the rod including the first end portion being connected to the second connection member and the second end portion extending from the nut member and serving as the free end portion, and the annular member being retained at the free end portion of the rod while having clearances between the free end portion of the rod and the annular member in the axial direction and in the radial direction of the rod, respectively. In a case where the rod oscillates in the radial direction by the outer force or the driving force of the rear wheel steering device, an impact force is generated between the annular member and the rod. Because an oscillation energy of the rod is absorbed by the impact force, the oscillation of the rod in the radial direction may be appropriately reduced.

According to the aforementioned configuration, the rear wheel steering device of a vehicle further includes a rotation prevention mechanism preventing the annular member from rotating about an axis of the rod relative to the nut.

According to another aspect of this disclosure, the rear wheel steering device of a vehicle further includes a nut including a cylindrical portion and a flange portion being formed at a distal end portion of the cylindrical portion, the distal end portion having an enlarged diameter, the nut being threadedly engaged with the free end portion of the rod, and a retention member retaining the annular member relative to the flange portion of the nut while having the clearance between the annular member and the flange portion in the axial direction in a state where the annular member is fitted in the cylindrical portion of the nut while having the clearance between the annular member and the cylindrical portion in the radial direction.

According to the aforementioned configuration, in a case where the rod oscillates in the radial direction, the oscillation of the rod may be appropriately reduced by the annular member and the nut that are repeatedly impacted with each other.

According to further aspect of this disclosure, the retention member corresponds to a snap ring being retained at the cylindrical portion of the nut in a state where the annular member is fitted in the cylindrical portion of the nut.

According to the aforementioned configuration, the rear wheel steering device may be simply and easily configured.

According to the aforementioned configuration, in a case where the rod oscillates in the radial direction, the rotation prevention mechanism may prevent the annular member from rotating with the rod, and may maintain the repeated impacts between the annular member and the nut. Accordingly, the oscillation of the rod may be appropriately reduced.

According to further aspect of this disclosure, the rotation prevention mechanism includes a flat surface portion being formed at an outer circumferential surface of the flange portion of the nut, and a pawl portion serving as a part of the annular member, the pawl portion extending in the axial direction of the rod and engaging with the flat surface portion of the nut.

According to the aforementioned configuration, the rear wheel steering device may be simply and easily configured.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a lateral cross sectional view illustrating a configuration of a rear wheel steering device according to an embodiment disclosed here;
Fig. 2 is an enlarged lateral cross sectional view illustrating an actuator according to the embodiment.
Fig. 3 is an enlarged lateral cross sectional view illustrating a controller according to the embodiment;
Fig. 4 is an enlarged longitudinal cross sectional view illustrating the controller according to the embodiment;
Fig. 5 is a lateral cross sectional view illustrating a structure of a free end portion of the rod according to the embodiment;
Fig.6 is a front view illustrating the structure of the free end portion of the rod according to the embodiment;
Fig.7 is a side view illustrating the structure of the free end portion of the rod according to the embodiment;
Fig. 8 is an enlarged cross sectional view illustrating the structure of the free end portion of the rod according to the embodiment;
Fig. 9 is a lateral cross sectional view illustrating a rotation prevention mechanism of an annular member according to the embodiment;
Fig. 10 is a longitudinal cross sectional view illustrating the rotation prevention mechanism of the annular member according to the embodiment;
Fig. 11 is a graph showing a simulation result of an attenuation operation of the rod according to the embodiment; and
Fig. 12 is a graph showing a simulation result of an attenuation operation of a known rod.

### DETAILED DESCRIPTION

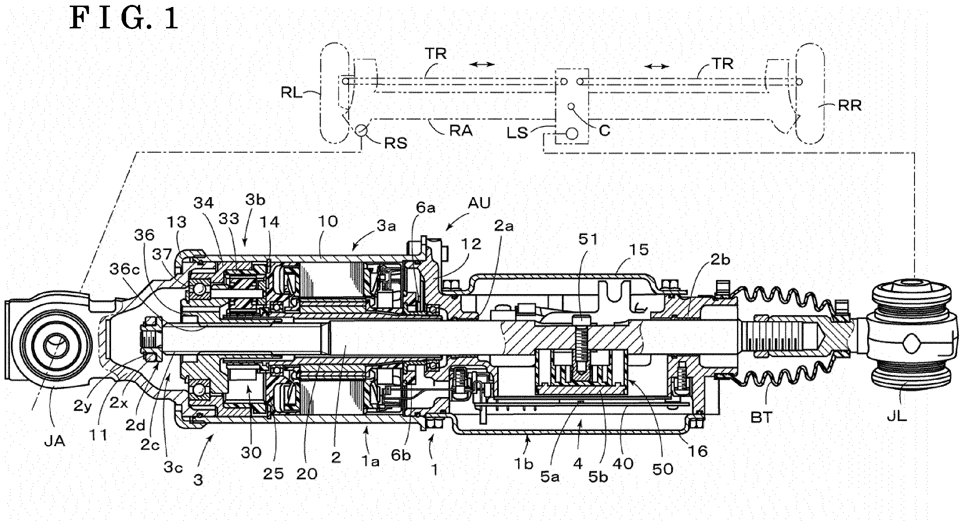

Hereinafter, a favorable embodiment of a disclosure will be explained with reference to the drawings. Fig. 1 shows a configuration of a rear wheel steering device of the embodiment of the disclosure. The rear wheel steering device of the embodiment serves as a part of a four-wheel steering system (4WS). A front wheel steering device is similar to a known front wheel steering device and will not be explained. A suspension mechanism supporting the rear wheels of the vehicle has various modes. In the embodiment, the suspension mechanism is configured as shown in two-dot chain line in Fig. 1. An actuator unit AU of the rear wheel steering device of the embodiment is provided between a support portion RS of a rear axle RA and a link LS. The support portion RS supports rear wheels RL, RR of the vehicle. The link LS is axially supported by the rear axle RA and oscillates about an oscillation center C. Accordingly, a portion between the support portion RS and the link LS is expanded and contracted, and the rear wheels RL, RR are steered via tie rods TR, TR in response to the oscillation of the link LS.

The actuator unit AU is configured such that a rod 2 is supported at a housing 1 so as to be movable in an axial direction (a linear motion). A first end of the actuator unit AU is connected to the link LS via a ball joint JL. The housing 1 is connected to the support portion RS via a ball joint JA. The ball joint JA and the ball joint JL serve as first and second connection members, respectively. An actuator 3 drives the rod 2, and expands and contracts a portion between the support portion RS of the rear axle RA and the link LS. Specifically, a controller 4 controls an electric motor 3a of the actuator 3, and converts the rotational output of the electric motor 3a into the linear motion of the rod 2 via a linear motion mechanism 3c after the rotation output speed is reduced by a reduction mechanism 3b. According to the embodiment, the electric motor 3a corresponds to a brushless motor.

According to the embodiment, the housing 1 mainly includes a first housing 1a on which components (for example, the electric motor 3a) of the actuator 3 are mounted, and a second housing 1b on which components (for example, an electric circuit board 40) of the controller 4 are mounted. A connection cover 11 is connected to a cylindrical body 10 of the housing 1a, and is connected to a body 12 of the housing 1b, the body 12 having opening portions in upper-lower directions and in the axial direction, respectively. The opening portions of the body 12 in the upper-lower directions are connected to a first lid body 15 and a second lid body 16, respectively. The housing 1 of the embodiment is made of metal, the connection cover 11 and the body 12 are made of aluminum, and the cylindrical body 10 and the first and second lid bodies 15, 16 are made of iron.

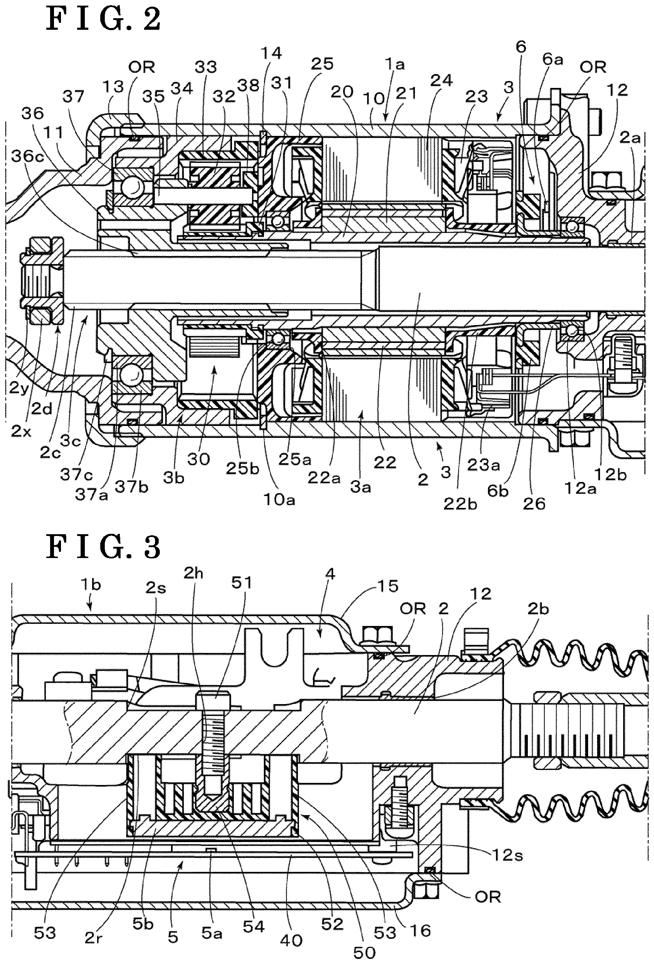

Fig. 2 shows an enlarged view of the actuator 3 that is press-fitted into the cylindrical body 10 in a state where a stator 24 is wounded with a coil 23. A hollow rotational shaft 20 corresponds to an output shaft of the electric motor 3a. The hollow rotational shaft 20 is rotatably supported at an inner radial portion 25a of an annular motor cover 25 which is provided within the cylindrical body 10, and at an annular groove 12a being provided at the body 12, via bearings 25b, 12b, respectively. A core 21 corresponding to a rotor of the electric motor 3a is press-fitted into a center portion of the hollow rotational shaft 20 in the axial direction. Permanent magnets 22 are equally provided in a circumferential direction of the core 21.

The rod 2 is coaxially disposed within the hollow rotational shaft 20. The rod 2 is movably supported at the housing 1 in the axial direction (a linear motion) and is unrotationally supported at the housing 1. Respective bushes 2a, 2b are provided between the rod 2 and the body 12. This is to reduce the sliding resistance of the rod 2 in order to smoothly move the rod 2 in the axial direction. That is, because the rear wheel steering device of the embodiment corresponds to a cantilevered expansion and contraction mechanism, the bushes 2a, 2b do not have to be bearings of a both-ends-supported movement mechanism in the axial direction.

The reduction mechanism 3b of the embodiment corresponds to a planetary gear mechanism 30. A sun gear 31 corresponding to an outer gear is integrally combined with the hollow rotational shaft 20 and is rotatably supported with the hollow rotational shaft 20. A ring gear 33 corresponding to an inner gear is fixed at a holder 34. A planetary gear 32 corresponding to an outer gear is meshed with the sun gear 31 and the ring gear 33, and rotates about the sun gear 31. A nut member 36 is rotatably supported at a holder 34 via a bearing 37 as a carrier rotatably supporting the planetary gear 32 via a pin 35. The bearing 37 is a ball bearing. An inner ring 37a of the bearing 37 is fitted into the nut member 36. An outer ring 37b of the bearing 37 is fitted into the holder 34. The bearing 37 is retained at the nut member 36 by a C-shaped spacer 37c.

According to the embodiment, the holder 34 and the pin 35 are made of metal (for example, iron), and the sun gear 31, the planetary gear 32, and the ring gear 33 are made of synthetic resin. The sun gear 31 is integrally formed with the metal-made hollow rotational shaft 20. The ring gear 33 is unrotatably supported at the holder 34 that is unrotatably supported at the cylindrical body 10. That is, as shown in Fig. 2, a snap ring 14 is retained at an annular groove 10a provided within the cylindrical body 10. In a state where the outer ring 37b of the bearing 37 and the holder 34 are sandwiched between an annular side surface of the snap ring 14 and an annular opening end surface of the connection cover 11, an annular lock nut 13 is threadedly engaged with a screw portion being provided at an opening end of the cylindrical body 10, the opening end provided at the reduction mechanism 3b (left in Fig. 2). Accordingly, the cylindrical body 10 and the connection cover 11 are fastened with each other. The outer ring 37b of the bearing 37 and the holder 34 are strictly sandwiched between the snap ring 14 and the connection cover 11 by a pressing force in the axial direction, the pressing force generated in response to the threaded engagement of the lock nut 13. As a result, the holder 34 is unrotatably retained at the cylindrical body 10. An annular step may be provided, instead of the annular groove 10a and the snap ring 14, at an inner circumferential surface of the cylindrical body 10, and may serve as a lock portion.

A male screw portion 2c and a female screw portion 36c are provided to be threadedly engaged with each other. The male screw portion 2c which includes a trapezoidal screw thread is provided at an outer circumferential surface of the rod 2 over a predetermined length in the axial direction. The female screw portion 36c is provided at an inner circumferential surface of the nut member 36. Accordingly, the linear motion mechanism 3c is configured with the nut member 36 and the rod 2. The weight that may apply to the rod 2 in the axial direction is absorbed by the cylindrical body 10 and the connection cover 11 via the nut member 36, the bearing 37, the holder 34 and the snap ring 14. The rod 2 protrudes from the nut member 36 and an annular member 2x is retained at a free end portion of the rod 2 while having clearances in the axial direction and in the radial direction of the rod 2, respectively.

Meanwhile, as shown in Fig. 3, an electric circuit board 40 including an electric control device as a controller 4 and a magnet block 50 including a displacement detection device 5 are contained within the housing 1b. The displacement detection device 5 includes a displacement sensor 5a and a permanent magnet 5b. The displacement sensor 5a corresponds to, for example, a magnetic vector sensor. The permanent magnet 5b corresponds to, for example, a neodymium magnet. The displacement sensor 5a is supported at the electric circuit board 40. The permanent magnet 5b is retained within the magnet block 50. The magnet block 50 includes a feature detecting the displacement of the rod 2 in the axial direction when the rod 2 is in a linear motion, and a feature preventing the rod 2 from rotating.

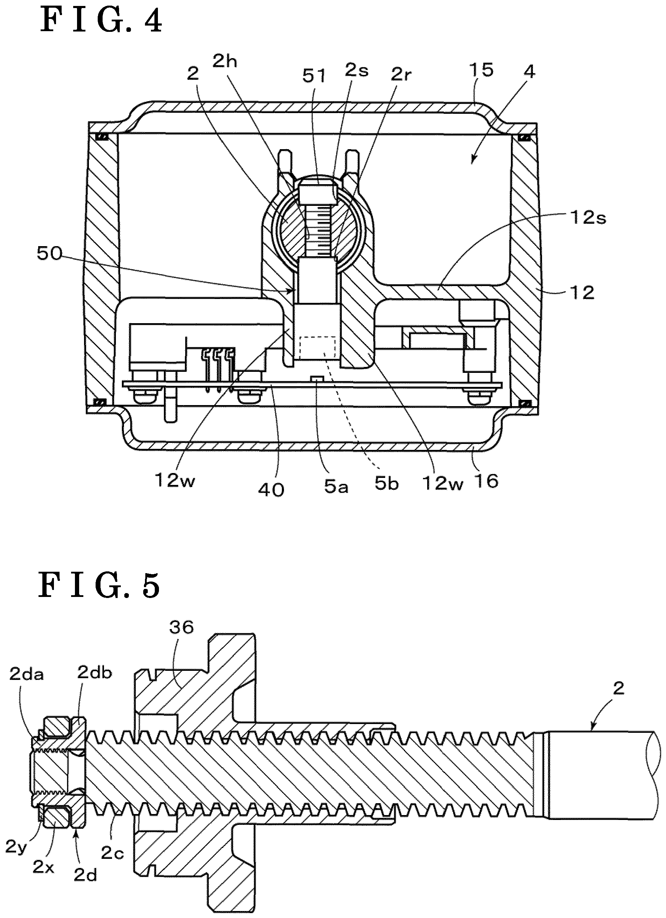

As shown in Figs. 3 and 4, opposing side surfaces of the rod 2 are provided with first and second long grooves (substantially rectangular recesses) 2r, 2s, respectively, the long grooves 2r, 2s that extend in the axial direction. The magnet block 50 is disposed at the first long hole 2r. A bolt 51 is inserted from the second long groove 2s that faces the first long groove 2r, and is fixed at the rod 2. The magnet block 50 is made of synthetic resin. As shown in Fig. 3, a retention portion 52 contains the permanent magnet 5b and a pair of leg portions 53, 53 is extendingly provided at opposing ends of the retention portion 52. A metal-made nut 54 is insert-molded between the leg portions 53, 53. Meanwhile, as shown in Fig. 4, a support portion 12s is provided inside the body 12. A pair of standing wall portions 12w, 12w is provided in parallel to the shaft of the rod 2. The retention portion 52 is retained between the pair of the standing wall portions 12w, 12w. The bolt 51 is provided within a through hole 2h of the rod 2, and is threadedly engaged with the nut 54. As a result, the rod 2 is unrotatably supported at the standing wall portions 12w, 12w of the body 12 and at the housing 1 by the magnet block 50.

According to the actuator 3 of the embodiment, when the hollow rotational shaft 20 is rotationally driven by the electric motor 3a, the speed of the rotational output is reduced by the reduction mechanism 3b of the planetary gear mechanism 30, and the nut member 36 is rotationally driven. The rotational motion of the nut member 36 is converted into the linear motion of the rod 2 by the linear motion mechanism 3c. Accordingly, because the portion between the rear axle RA and the support portion RS are expanded and contracted, the steering of the rear wheels is adjusted.

According to the embodiment, as shown in enlarged views in Figs. 5 to 7, the free end portion of the rod 2 is threadedly engaged with the nut 2d. The annular member 2x is fitted in the nut 2d and is retained by a snap ring 2y serving as a retention member. As shown in Fig. 5, the nut 2d includes a cylindrical portion 2da and a flange portion 2db in which a distal end portion of the cylindrical portion 2da has an enlarged diameter. The flange portion 2db is formed in a polygonal shape (for example, a hexagonal shape).

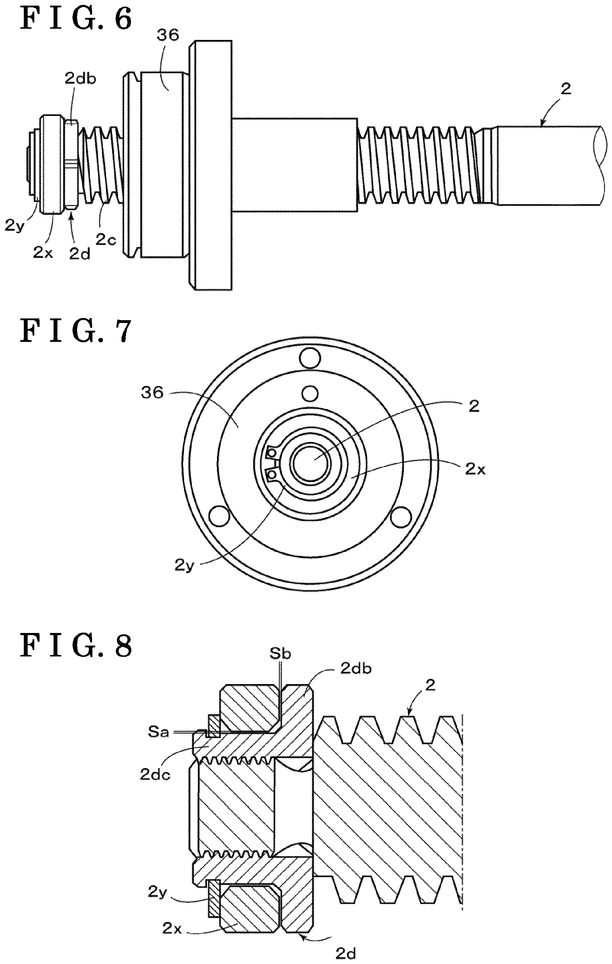

The annular member 2x is made from a metal-made ring. As shown in an enlarged view in Fig. 8, in a state where the annular member 2x is fitted in the cylindrical portion 2da while having a clearance (a clearance Sa) in the radial direction, the annular member 2x is retained at the flange portion 2db of the nut 2d while having a clearance (a clearance Sb) in the axial direction, and prevents the nut 2d from coming off from the rod 2 in the axial direction by the snap ring 2y. Accordingly, the annular member 2x may be relatively and desirably displaced relative to the rod 2 in the radial direction within the range of the clearance Sa. Because the clearance Sb is provided in the axial direction, the annular member 2x is not prevented from moving in the radial direction.

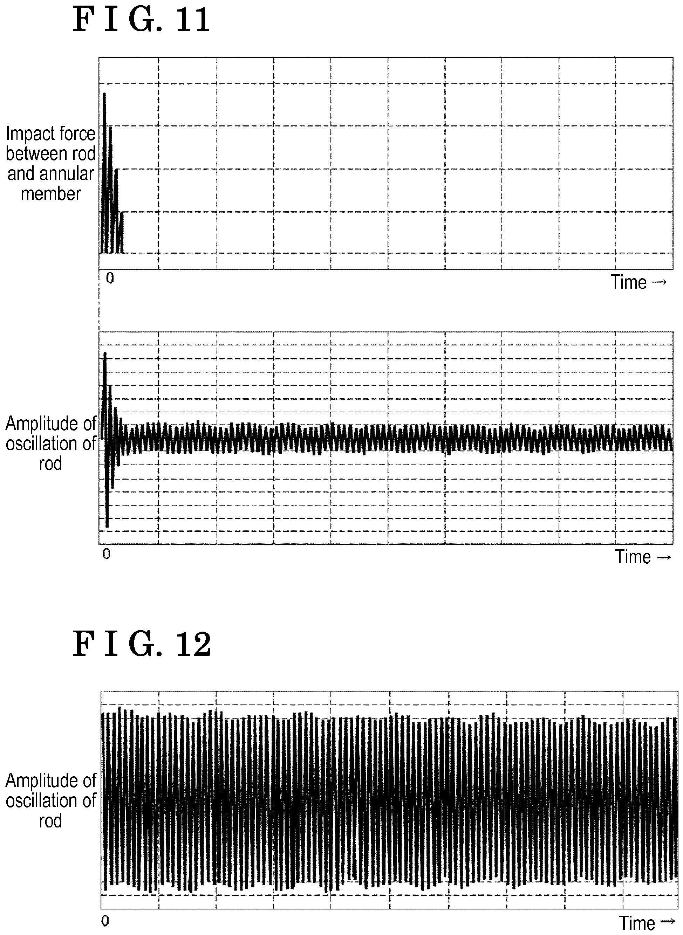

In a case where the rod 2 oscillates in the radial direction, the annular member 2x and the nut 2d relatively displace from each other, and repeat the collision with each other. The oscillation energy of the rod 2 is absorbed by the collisional force, and the oscillation of the rod 2 is appropriately reduced. A simulation result of the reduction movement is shown in Figs. 11A and 11B. That is, as shown in Fig. 11, when a vibrating force is inputted to the rod 2 and the oscillation is generated at a time 0, the rod 2 largely oscillates as shown in a graph in Fig. 11B in an initial stage where an impact force between the annular member 2x and the nut 2d is large. However, each time the annular member 2 and the nut 2d are impacted with each other, the amplitude of the oscillation of the rod 2 decreases. It is determined that the oscillation of the rod 2 is reduced in a short time. On the other hand, Fig. 12 shows the oscillation of the rod 2 by the vibrating force (the similar impact force shown in the graph in Fig. 11A) in a case where the annular member 2x is not provided. The oscillation is rarely reduced.

Meanwhile, the rod 2 may have a rotational vibration (whirling) about the bush 2a instead of the random oscillation in the radial direction due to the ununiformity of size of components, or due to an outer force condition. Thus, the annular member 2 may rotate with the rod 2 by the rotational vibration energy of the rod 2. In this case, because the annular member 2x and the rod 2 move similarly, and the impact between the annular member 2x and the rod 2 is rarely generated. Thus, the annular member 2x may not reduce the oscillation efficiently.

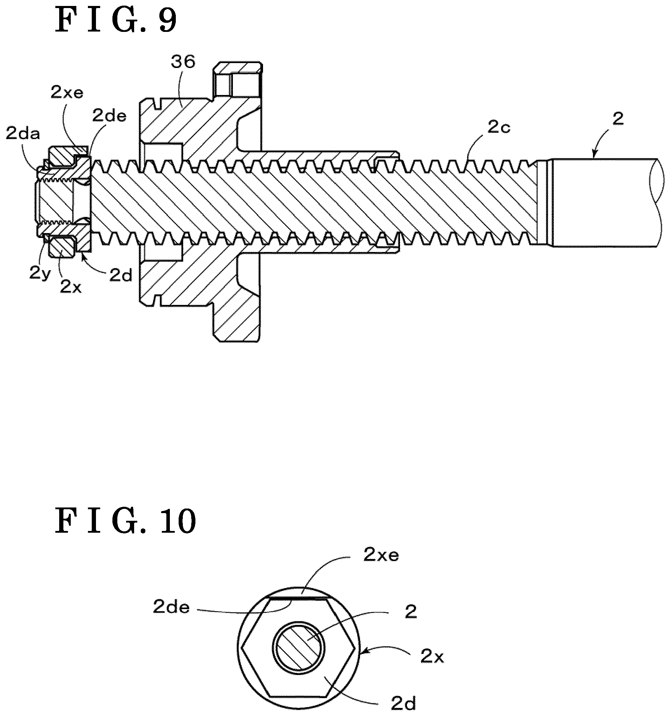

According to the embodiment shown in Figs. 9 and 10, the annular member 2x is provided with a rotation prevention mechanism preventing the annular member 2 from relatively rotating with the rod 2 about the axis of the rod 2. The rotation prevention mechanism is provided with a flat surface portion 2de (for example, one of flat surfaces of the outer surface having a hexagonal shape) of the nut 2d and a pawl portion 2xe of the annular member 2x. The flat surface portion 2de is provided at an outer circumferential surface of the flange portion 2db of the nut 2d. The pawl portion 2xe corresponding to a portion of the annular member 2x extends in the axial direction of the rod 2 and engages with the flat surface portion 2de of the nut 2d. The rotation prevention mechanism may be provided by a spline fitting of the annular member 2x relative to the cylindrical portion 2da of the nut 2d. Furthermore, the annular member 2x may be made of metal (for example, cupper or brass) that includes higher density so as to have a certain weight, and may reduce the outer diameter and thickness of the annular member 2x. Accordingly, the mountability may be enhanced.

The manufacturing method of the actuator unit AU of the aforementioned configuration will hereunder be explained. The stator 24 being wound with the coil 23 is press-fitted into the cylindrical body 10 by a press-fitting device, and is fixed at a predetermined position shown in Fig. 2. The motor cover 25 is inserted into the cylindrical body 10 and the snap ring 14 is fixed at the annular groove 10a of the cylindrical body 10. Aside from this, after the bearing 25b is press-fitted into the hollow rotational shaft 20, a resin-made pressing member 22a for retaining the permanent magnet 22 is press-fitted into the hollow rotational shaft 20 being integrally formed with the sun gear 31, and the core 21 is press-fitted into the hollow rotational shaft 20. The permanent magnet 22 is contained in the core 21, and is magnetized in a subassembly state in which the pressing member 22b is press-fitted in the core 21.

Next, the hollow rotational shaft 20 is inserted into a hollow portion of the stator 24, and is retained in a state where the bearing 25b is fitted into a hollow portion of the motor cover 25. Furthermore, a support member 26 that is fixed with a plastic magnet 6b for a magnetic pole sensor 6 is press-fitted at an end portion of the hollow rotational shaft 20. After the plastic magnet 6b is magnetized, the body 12 is connected to an opening of the cylindrical body 10, the opening that is provided at the electric motor 3a (the right in Fig. 2), and is bolted. An outer ring of the bearing 12b is press-fitted into the annular groove 12a of the body 12. Because the body 12 is connected to the cylindrical body 10, an inner ring of the bearing 12b is fitted in the hollow rotational shaft 20.

Meanwhile, the inner ring 37a of the bearing 37 is fitted in the nut member 36 and is retained by the spacer 37c. The outer ring 37b of the bearing 37 is fitted in the holder 34. Next, the ring gear 33 is mounted on the holder 34, and the planetary gear 32 is supported with the nut member 36 by the pin 35 at which a retention member 38 is retained. The male screw portion 2c of the rod 2 is threadedly engaged with the female screw portion 36c of the nut member 36. After the nut 2d is threadedly fixed at the distal end of the male screw portion 2c, the annular member 2x is fitted in the cylindrical portion 2da of the nut 2d. The snap ring 2y is retained at the cylindrical portion 2da.

The rod 2 is provided within the hollow rotational shaft 20 that is shown in Figs. 1 to 3. The sun gear 31 is mounted on the planetary gear 32 and the ring gear 33 so as to be threadedly engaged therewith. An end surface of the holder 34 in the axial direction is pressed to a side end surface of the snap ring 14 so as to come in contact therewith. Next, the connection cover 11 is installed and the lock nut 13 is threadedly engaged with the cylindrical body 10. Accordingly, the outer ring 37b of the bearing 37 and the holder 34 are sandwiched between the snap ring 14 and the connection cover 11. Here, the rod 2 is provided within the bushes 2a, 2b being provided at the body 12, and extends to the outside of the body 12. The magnet block 50 is provided at the first long groove 2r of the rod 2 within the body 12. The retention portion 52 of the magnet block 50 is retained between the standing wall portions 12w, 12w. When the bolt 51 is provided in the through hole 2h of the rod 2 and is threadedly engaged with the nut 54, the rod 2 is unrotatably supported at the housing 1.

Furthermore, the electric circuit base board 40 on which the displacement sensor 5a is mounted is contained in the body 12. The displacement sensor 5a is fixed at a position facing the permanent magnet 5b. When the first and second lid bodies 15, 16 are bolted to the body 12 via an O-ring OR of the seal member after a wire harness is connected, the body 12 comes to be a liquid-tight space. Then, the ball joint JL serving as the second connection member is connected to the end portion of the rod 2 (that is opposite to the free end portion) which is mounted with a rubber boot BT.

## Claims

1. A rear wheel steering device of a vehicle, comprising:
a housing (1, 1a, 1b) configured to be connected to a suspension mechanism via a first connection member (JA) and a second connection member (JL), the suspension mechanism supporting rear wheels (RL, RR) of the vehicle;
an electric motor (3a) being contained in the housing (1, 1a, 1b);
a reduction mechanism (3b) being contained in the housing (1, 1a, 1b), the reduction mechanism (3b) reducing an output speed of the electric motor (3a);
a linear motion mechanism (3c) including a nut member (36) and a rod (2), the nut member (36) being connected to the reduction mechanism (3b) and being rotated, the rod (2) being threadedly engaged with the nut member (36), the rod (2) including a first end portion and a second end portion, the first end portion being connected to the second connection member (JL), the second end portion extending from the nut member (36) and serving as a free end portion; and a nut (2d) including a cylindrical portion (2da) and a flange portion (2db) being formed at a distal end portion of the cylindrical portion (2da), the distal end portion having an enlarged diameter, the nut (2d) being threadedly engaged with the free end portion of the rod (2);
**characterized in that**
the linear motion mechanism (3c) further comprises an annular member (2x), the annular member (2x) being retained at the free end portion of the rod (2) while having clearances (Sa, Sb) between the free end portion of the rod (2) and the annular member (2x) in an axial direction and in a radial direction of the rod (2), respectively, the linear motion mechanism (3c) converting a rotational motion of the nut member (36) into a linear motion of the rod (2), and
the rear wheel steering device further comprises a rotation prevention mechanism preventing the annular member (2x) from rotating about an axis of the rod (2) relative to the nut (2d).

2. The rear wheel steering device of a vehicle according to claim 1, further comprising:
a retention member (2y) retaining the annular member (2x) relative to the flange portion (2db) of the nut (2d) while having the clearance (Sa) between the annular member (2x) and the flange portion (2db) in the axial direction in a state where the annular member (2x) is fitted in the cylindrical portion (2da) of the nut (2d) while having the clearance (Sb) between the annular member (2x) and the cylindrical portion (2da) in the radial direction.

3. The rear wheel steering device of a vehicle according to claim 2, wherein the retention member (2y) corresponds to a snap ring being retained at the cylindrical portion (2da) of the nut (2d) in a state where the annular member (2x) is fitted in the cylindrical portion (2da) of the nut (2d).

4. The rear wheel steering device of a vehicle according to claim 1, wherein
the rotation prevention mechanism includes
a flat surface portion (2de) being formed at an outer circumferential surface of the flange portion (2db) of the nut (2d); and
a pawl portion (2xe) serving as a part of the annular member (2x), the pawl portion (2xe) extending in the axial direction of the rod (2) and engaging with the flat surface portion (2de) of the nut (2d).

## Patentansprüche

1. Hinterradlenkeinrichtung eines Fahrzeugs, mit:
einem Gehäuse (1, 1a, 1b), das ausgebildet ist, über ein erstes Verbindungselement (JA) und ein zweites Verbindungselement (JL) mit einem Aufhängemechanismus verbunden zu werden, wobei der Aufhängemechanismus Hinterräder (RL, RR) des Fahrzeugs trägt,
einem Elektromotor (3a), der in dem Gehäuse (1, 1a, 1b) enthalten ist,
einem Untersetzungsmechanismus (3b), der in dem Gehäuse (1, 1a, 1b) enthalten ist, wobei der Untersetzungsmechanismus (3b) eine Abtriebsdrehzahl des Elektromotors (3a) reduziert,
einem Linearbewegungsmechanismus (3c) mit einem Mutterglied (36) und einer Stange (2), wobei das Mutterglied (36) mit dem Untersetzungsgetriebe (3b) verbunden ist und gedreht wird, wobei die Stange (2) mit dem Mutterglied (36) in Gewindeeingriff steht, wobei die Stange (2) einen ersten Endabschnitt und einen zweiten Endabschnitt aufweist, wobei der erste Endabschnitt mit dem zweiten Verbindungselement (JL) verbunden ist, wobei sich der zweite Endabschnitt von dem Mutterglied (36) erstreckt und als freier Endabschnitt dient und
einer Mutter (2d) mit einem zylindrischen Abschnitt (2da) und einem an einem distalen Endabschnitt des zylindrischen Abschnitts (2da) ausgebildeten Flanschabschnitt (2db), wobei der distale Endabschnitt einen vergrößerten Durchmesser aufweist und die Mutter (2d) mit dem freien Endabschnitt der Stange (2) in Gewindeeingriff steht,
**dadurch gekennzeichnet, dass**
der Linearbewegungsmechanismus (3c) ferner ein ringförmiges Element (2x) umfasst, wobei das ringförmige Element (2x) am freien Endabschnitt der Stange (2) gehalten wird, während es Abstände (Sa, Sb) zwischen dem freien Endabschnitt der Stange (2) und dem ringförmigen Element (2x) in einer axialen Richtung beziehungsweise einer radialen Richtung der Stange (2) aufweist, wobei der lineare Bewegungsmechanismus (3c) eine Drehbewegung des Mutterglieds (36) in eine lineare Bewegung der Stange (2) umwandelt, und
die Hinterradlenkeinrichtung ferner einen Drehverhinderungsmechanismus aufweist, der verhindert, dass sich das ringförmige Element (2x) in Bezug auf die Mutter (2d) um eine Achse der Stange (2) dreht.

2. Hinterradlenkeinrichtung eines Fahrzeugs nach Anspruch 1, mit:
einem Rückhalteelement (2y), das in Bezug auf den Flanschabschnitt (2db) der Mutter (2d) das ringförmige Element (2x) hält, während es den Abstand (Sa) zwischen dem ringförmigen Element (2x) und dem Flanschabschnitt (2db) in axialer Richtung in einem Zustand aufweist, in dem das ringförmige Element (2x) in dem zylindrischen Abschnitt (2da) der Mutter (2d) eingepasst ist, während es den Abstand (Sb) zwischen dem ringförmigen Element (2x) und dem zylindrischen Abschnitt (2da) in radialer Richtung aufweist.

3. Hinterradlenkeinrichtung eines Fahrzeugs nach Anspruch 2, wobei das Rückhalteelement (2y) einem Sprengring entspricht, der am zylindrischen Abschnitt (2da) der Mutter (2d) in einem Zustand gehalten wird, in dem das ringförmige Element (2x) in dem zylindrischen Abschnitt (2da) der Mutter (2d) eingepasst ist.

4. Hinterradlenkeinrichtung eines Fahrzeugs nach Anspruch 1, wobei der Drehverhinderungsmechanismus beinhaltet:
einen ebenen Oberflächenabschnitt (2de), der an einer äußeren Umfangsfläche des Flanschabschnitts (2db) der Mutter (2d) ausgebildet ist und
einen Sperrklinkenabschnitt (2xe), der als Teil des ringförmigen Elements (2x) dient, wobei sich der Sperrklinkenabschnitt (2xe) in axialer Richtung der Stange (2) erstreckt und mit dem ebenen Oberflächenabschnitt (2de) der Mutter (2d) in Eingriff steht.

## Revendications

1. Dispositif de direction de roue arrière d'un véhicule, comprenant :
un boîtier (1, 1a, 1b) configuré pour être raccordé à un mécanisme de suspension via un premier élément de raccordement (JA) et un second élément de raccordement (JL), le mécanisme de suspension supportant des roues arrière (RL, RR) du véhicule ;
un moteur électrique (3a) étant contenu dans le boîtier (1, 1a, 1b) ;
un mécanisme de réduction (3b) étant contenu dans le boîtier (1, 1a, 1b), le mécanisme de réduction (3b) réduisant une vitesse de sortie du moteur électrique (3a) ;
un mécanisme de mouvement linéaire (3c) comprenant un élément d'écrou (36) et une tige (2), l'élément d'écrou (36) étant raccordé au mécanisme de réduction (3b) et étant entraîné en rotation, la tige (2) étant mise en prise, par filetage, avec l'élément d'écrou (36), la tige (2) comprenant une première partie d'extrémité et une seconde partie d'extrémité, la première partie d'extrémité étant raccordée au second élément de raccordement (JL), la seconde partie d'extrémité s'étendant à partir de l'élément d'écrou (36) et servant de partie d'extrémité libre ; et un écrou (2d) comprenant une partie cylindrique (2da) et une partie de bride (2db) qui est formée au niveau d'une partie d'extrémité distale de la partie cylindrique (2da), la partie d'extrémité distale ayant un diamètre agrandi, l'écrou (2d) étant mis en prise, par filetage, avec la partie d'extrémité libre de la tige (2) ;
**caractérisé en ce que** :
le mécanisme de mouvement linéaire (3c) comprend en outre un élément annulaire (2x), l'élément annulaire (2x) étant retenu au niveau de la partie d'extrémité libre de la tige (2) tout en ayant des jeux (Sa, Sb) entre la partie d'extrémité libre de la tige (2) et l'élément annulaire (2x) dans une direction axiale et dans une direction radiale de la tige (2), respectivement, le mécanisme de mouvement linéaire (3c) convertissant un mouvement de rotation de l'élément d'écrou (36) en un mouvement linéaire de la tige (2), et
le dispositif de direction de roue arrière comprend en outre un mécanisme anti-rotation empêchant l'élément annulaire (2x) de tourner autour d'un axe de la tige (2) par rapport à l'écrou (2d).

2. Dispositif de direction de roue arrière d'un véhicule selon la revendication 1, comprenant en outre :
un élément de retenue (2y) retenant l'élément annulaire (2x) par rapport à la partie de bride (2db) de l'écrou (2d) tout en ayant le jeu (Sa) entre l'élément annulaire (2x) et la partie de bride (2db) dans la direction axiale dans un état dans lequel l'élément annulaire (2x) est monté dans la partie cylindrique (2da) de l'écrou (2d) tout en ayant le jeu (Sb) entre l'élément annulaire (2x) et la partie cylindrique (2da) dans la direction radiale.

3. Dispositif de direction de roue arrière d'un véhicule selon la revendication 2, dans lequel l'élément de retenue (2y) correspond à une bague élastique qui est retenue au niveau de la partie cylindrique (2da) de l'écrou (2d) dans un état dans lequel l'élément annulaire (2x) est monté dans la partie cylindrique (2da) de l'écrou (2d).

4. Dispositif de direction de roue arrière d'un véhicule selon la revendication 1, dans lequel :
le mécanisme anti-rotation comprend :
une partie de surface plate (2de) qui est formée au niveau d'une surface circonférentielle externe de la partie de bride (2db) de l'écrou (2d) ; et
une partie de cliquet (2xe) servant de partie de l'élément annulaire (2x), la partie de cliquet (2xe) s'étendant dans la direction axiale de la tige (2) et se mettant en prise avec la partie de surface plate (2de) de l'écrou (2d).
